# EUROPÄISCHE PATENTSCHRIFT

(11) **EP 2 128 412 B1**
(45) Veröffentlichungstag und Bekanntmachung des Hinweises auf die Patenterteilung: **18.11.2020**
(21) Anmeldenummer: 09003258.2
(22) Anmeldetag: 06.03.2009
(51) Int. Cl.: F02D 41/00, F02D 41/38, F02D 41/28, F02D 19/06, F02D 19/08

(54) **Bestimmen der Kraftstoffeigenschaften und deren Einfluss auf die Abgasemissionen während des Betriebs einer Brennkraftmaschine**
Calculation of fuel characteristics and its influence on the exhaust gas emissions during the operation of an internal combustion engine
Détermination des propriétés de carburant et leur influence sur les émissions des gaz d'échappement lors du fonctionnement d'un moteur à combustion interne

(30) Priorität: 27.05.2008 DE 102008025350
(43) Veröffentlichungstag der Anmeldung: 02.12.2009
(60) Teilanmeldung: 20201426.2
(73) Patentinhaber: MAN Truck & Bus SE, 80995 München (DE)
(72) Erfinder: Döring, Andreas, 82008 München (DE)
(74) Vertreter: Reichert, Christian

(56) Entgegenhaltungen:
- EP-A2- 1 775 584
- WO-A1-2005/021952
- WO-A1-2008/007128
- DE-A1- 10 327 978

## Beschreibung

Alternative und synthetische Kraftstoffe, wie Fettsäuremethylester (FAME), Pflanzenöl, verflüssigte Biomasse (Biomass-to-liquid (BTL)), verflüssigte Gase (Gas-to-liquid (GTL)) etc., gewinnen immer mehr an Bedeutung. Sie unterscheiden sich allerdings in ihren Stoffeigenschaften wie Dichte, Viskosität, Heiz- und Brennwert, Wärmekapazität, Aromatengehalt, Sauerstoffgehalt, Wasserstoffgehalt, Kohlenstoffgehalt, anorganischen Verunreinigungen (Alkalimetalle, Erdalkalimetalle), Phosphorgehalt, Schwefelgehalt, Lagerfähigkeit, Siedetemperatur und Schallgeschwindigkeit etc. meist von den genormten und zugelassenen Standardkraftstoffen, die für die Motorauslegung und Motorabnahme verwendet bzw. vom Gesetzgeber vorgeschrieben werden.

Dies führt dazu, dass, wenn die Brennkraftmaschinen mit diesen Nicht-Standard-Kraftstoffen betrieben werden, sich die Emissionen, die Abgastemperaturen, die maximale Motorleistung und die Zylinderspitzendrücke verändern können.

Durch die veränderten Abgasemissionen werden eventuell die gesetzlich vorgeschriebenen Grenzwerte überschritten. So steigen beispielsweise bei der Verwendung von FAME die NOₓ-Emissionen an, während die Partikelemissionen absinken.

Sinken die Abgastemperaturen auf Grund eines abweichenden Brennwertes oder Zündverzugs, kann es bei Einsatz von Katalysatoren dazu kommen, dass deren Anspringtemperaturen nicht mehr oder seltener erreicht werden, wodurch sich ebenfalls eine Verschlechterung der Emissionen ergibt. Demgegenüber kann ein Ansteigen der Abgastemperaturen zu einer thermischen Schädigung der Katalysatoren führen.

Gleichzeitig kommt es beim Einsatz von "Biokraftstoffen" durch den erhöhten Eintrag von Alkali- und Erdalkalimetallen, Phosphor und Schwefel zu einer beschleunigten chemischen Deaktivierung der Katalysatoren zur Abgasnachbehandlung.

Da das Kraftstoffsystem und der Motorölkreislauf meist nicht hermetisch voneinander getrennt sind, führt dies zu einer Vermischung von Kraftstoff und Motoröl. Durch den Einsatz von nicht zugelassenem Kraftstoff kommt es daher zu einer unkontrollierbaren Veränderung der Stoffeigenschaften des Motoröls, was wiederum zu einer Schädigung des Motors führen kann.

Um dies zu erkennen und gegebenenfalls reagieren zu können, wäre es sinnvoll, die Kraftstoffeigenschaften während des Betriebs zu bestimmen.

In DE 10346314A1 ist ein gattungsgemäßer Sensor beschrieben, mit dessen Hilfe die Viskosität des Kraftstoffs ermittelt werden kann. Hierfür wird der Kraftstoff über einen Aktuator in Schwingungen versetzt und diese Schwingungen von einem Drucksensor detektiert. Durch die Auswertung des Druckverlaufs kann die Viskosität bestimmt werden. Der Nachteil dieses Verfahrens besteht in der Notwendigkeit eines Aktuators, der die Kosten und den Wartungsaufwand erhöht.

In DE10152236A1, DE10217376A1 und DE10217379A1 sind Verfahren beschrieben, mit dem die Kraftstoffeigenschaften aus dem Dampfdruck des Kraftstoffs bestimmt werden. Hierfür wird der Dampfdruck im Kraftstoffbehälter und/oder dem Kraftstoffsystem ermittelt. Dazu ist es zwingend notwendig, dass der Motor keinen Kraftstoff aus dem Kraftstoffsystem entnimmt, d.h. der Motor muss abgestellt werden. Daher ist dieses Verfahren bei Motoren, bei denen ein Abstellen nicht möglich ist, wie z.B. bei Motoren für Stromaggregate, Blockheizkraftwerke, Kompressoren etc., nicht einsetzbar. Zudem ist es zur Bestimmung des Dampfdrucks notwendig, das Volumen, in dem die Druckmessung vorgenommen wird, gegenüber der Umgebung abzutrennen, bzw. sogar einen leichten Unterdruck in diesem Volumen zu erzeugen. Dies macht den Einsatz von Absperrventilen und/oder Vakuumpumpen notwendig, was hohe Kosten und einen entsprechend hohen Wartungsaufwand zur Folge hat.

In DE10015162A1 wird ein Verfahren beschrieben, in dem das Verbrennungsgeräusch detektiert und daraus die Qualität der Einspritzung, d.h. der Einspritzbeginn oder die Einspritzrate, bestimmt wird. Der Nachteil dieses Verfahrens besteht darin, dass das Verbrennungsgeräusch nicht zur Ermittlung des verwendeten Kraftstoffs herangezogen werden kann, da es zusätzlich von mehreren anderen Faktoren, wie z. B. den Toleranzen, dem Verschmutzungsgrad oder Verschleiß der Einspritzdüse, der Einspritzpumpe, den Einlassventilen, den Auslassventilen, dem Abgasturbolader etc. beeinflusst wird. Da das Verbrennungsgeräusch in hohem Maße von der freigesetzten Energie abhängt, gestattet dieses Verfahren, auf Grund der üblicherweise volumetrischen Zugabe von Kraftstoff in den Brennraum, nur die Bestimmung des volumetrischen Heizwertes, des Spritzbeginns oder der Einspritzrate mit ausreichender Genauigkeit, die Bestimmung der Viskosität oder Kompressibilität ist nicht möglich, demzufolge auch keine eindeutigen Aussagen über den verwendeten Kraftstoff. Vielmehr dient das Verfahren hauptsächlich zur Verbesserung der Laufruhe.

In DE19955796B4 werden Kraftstoffe durch eine winkelaufgelöste Beschleunigungsmessung der Kurbelwelle und damit der freigesetzten Energie unterschieden. Analog zu der Patentschrift DE10015162A1 ermöglicht dieses Verfahren nur die Bestimmung des volumetrischen Heizwertes mit ausreichender Genauigkeit, die Bestimmung der Viskosität oder Kompressibilität ist nicht möglich, d.h. eindeutige Aussagen über den verwendeten Kraftstoff sind auch hier nicht möglich. Vielmehr dient dieses Verfahren ebenfalls hauptsächlich der Verbesserung der Laufruhe.

In DE4019083A1,EP1 775 584 A2 oder DE103 27 978 A1 werden jeweils ein Verfahren beschrieben, in dem die Kraftstoffqualität mittels eines Brennraumdruck., Lambda- oder Kraftstoffqualitätssensors bestimmt und die Motorparameter entsprechend dieser Information verändert werden. Der Nachteil dieser Sensoren besteht darin, dass sie sehr empfindlich und teuer sind.

Weiter befassen sich die in der WO 2005/021952 A1 und der WO 2008/ 007128 A1 beschriebenen Verfahren damit, die Kraftstoffqualität bzw. Kraftstoffart durch eine Schwingungsanalyse zu ermitteln, indem eine Schwindung in den Kraftstoff eingekoppelt wird und dann das Schwingungsverhalten durch entsprechende Schwingungsaufnehmer aufgenommen und nachfolgend analysiert wird. In Abhängigkeit vom Ergebnis der Schwingungsanalyse wird auf eine Kraftstoffqualität bzw. Kraftstoffart geschlossen. Weiter wird vorgeschlagen in Abhängigkeit von der festgestellten Kraftstoffqualität bzw. der Abweichung von einer Kraftstoffreferenzqualität Einspritzzeitpunkte und/ oder Einspritzmengen variiert. Diese Vorgehensweise ist jedoch nicht geeignet, auf kritische Abweichungen der Abgasrohemission von einer Soll-Abgasrohemission zu reagieren.

Zudem werden die Sensoren üblicherweise dazu herangezogen, die Laufruhe des Motors und/oder das Startverhalten zu verbessern, eine Anpassung der Emissionen wird nicht beschrieben, ebenso wenig der Einfluss von nicht zugelassenem Kraftstoff auf die Motoröleigenschaften.

Hiervon ausgehend liegt der Erfindung die Aufgabe zugrunde, zur Optimierung der Wirkung des Abgasnachbehandlungssystems und zu dessen Schonung die Kraftstoffeigenschaften zu erfassen. Diese Aufgabe wird gelöst gemäß dem kennzeichnenden Teil von Anspruch 1.

Der Kern der Erfindung besteht darin, aus den sich bei diskontinuierlicher Förderung und/oder Kraftstoffentnahme im Kraftstoffsystem ausbildenden Druckschwingungen auf die verwendete Kraftstoffsorte und die Abgasemissionen zu schließen. Diese Druckschwingungen werden von der Dichte, der Viskosität, der Schallgeschwindigkeit und der Kompressibilität des verwendeten Kraftstoffs beeinflusst. Werden diese Schwingungen nun mit Hilfe eines Drucksensors aufgenommen und diese in einer elektronischen Kontrolleinheit ausgewertet, so steht eine sehr einfache und billige Möglichkeit zur Differenzierung unterschiedlicher Kraftstoffe zur Verfügung. Mit Hilfe dieser Informationen kann auf die Abgasemissionen, die sich aus dem aktuell verwendeten Kraftstoff ergibt, geschlossen werden. Führt der nicht zugelassene Kraftstoff zu einer dauerhaften und irreversiblen Veränderung der Emissionen, ist es mit Hilfe der festgestellten Art des verwendeten Kraftstoffs und der Betriebsdauer möglich, diese Veränderungen abzuschätzen.

Dabei können die Frequenzen der Schwingung, auch höherer Ordnung, deren Maxima, der Druckanstieg und/oder der Druckabfall als Bewertungsgröße herangezogen werden. Zur einfachen Auswertung der Frequenzen bietet es sich an, eine Fouriertransformation, inbesondere eine diskrete und/ oder schnelle Fouriertransformation, des gemessenen Drucksignals durchzuführen.

Sind die Kraftstofffördereinrichtungen systembedingt bereits mit einem Sensor auf der Hochdruckseite ausgerüstet, kann dieser für die Sensierung des Druckverlaufs verwendet werden. Dies ist beispielsweise bei Speichereinspritzsystemen, wie dem Common- Rail- System, der Fall, bei denen der Kraftstoff in einen Druckspeicher, das sogenannte Rail, auf einen bestimmten Druck gefördert und über Injektoren, die meist einzeln angesteuert werden, dem Brennraum zugeführt wird. Um eine optimale Performance des Systems sicherzustellen und einen Beschädigung durch zu hohe Kraftstoffdrücke zu vermeiden, wird der Druck auf der Hochdruckseite ermittelt und eingeregelt.

Da die Viskosität von der Temperatur des Mediums abhängt, ist es sinnvoll, die Temperatur des Kraftstoffs mit Hilfe eines Temperatursensors zu bestimmen.

Bei der Förderung des Kraftstoffs auf den Einspritzdruck kommt es auf Grund von Reibung in der Kraftstoffpumpe und der Verrichtung von Kompressionsarbeit zu einem Anstieg der Kraftstofftemperatur. Da der Temperaturanstieg von der Wärmekapazität des Kraftstoffs abhängt, kann dies dazu dienen, die Bestimmung der Kraftstoffsorte weiter zu verfeinern. Hierfür wird die Kraftstofftemperatur auf der Niederdruck- und auf der Hochdruckseite der Pumpe bestimmt und aus der Temperaturdifferenz und dem geförderten Kraftstoffvolumen bzw. dem Kraftstoffmassenstrom die Wärmekapazität bestimmt.

Für die Ermittlung der Temperatur auf der Niederdruckseite kann in erster Näherung auch die Umgebungstemperatur oder die Temperatur im Kraftstofftank herangezogen werden.

Wurde die Kraftstoffsorte und/oder eine Abweichung von der Norm festgestellt, kann diese Information in einer elektronischen Kontrolleinheit gespeichert und gegebenenfalls zu einem späteren Zeitpunkt ausgelesen werden.

Da die Herstellergarantie sich üblicherweise darauf beschränkt, dass die Brennkraftmaschine mit zugelassenem Kraftstoff betrieben wird, kann diese Funktion als Nachweis der korrekten Betankung dienen.

Auch eine Anzeige der Kraftstoffsorte und/oder eine Information über die Verwendung von nicht zugelassenem Kraftstoff mit Hilfe einer optischen Anzeigeeinheit ist möglich.

Wurde eine Abweichung der Abgasemissionen durch die Verwendung von Nicht-Referenzkraftstoff festgestellt, ist es möglich, diese durch Variation der Betriebsparameter des Motors und des Nachbehandlungssystems den Emissionen bei Verwendung von Standardkraftstoff anzupassen. So können durch Veränderung von Motorparametern, wie Einspritzzeitpunkt und/oder Einspritzdruck und/oder Abstände von geteilten Einspritzungen und/oder Einspritzdauern von geteilten Einspritzungen und/oder der Abgasrückführungsrate und/oder des Kraftstoff-/Luft-Verhältnisses die Emissionen wieder dem Niveau des Normkraftstoffs angeglichen werden.

Bei Verwendung eines Nachbehandlungssystems zur Einhaltung der Emissionen können die Stellgrößen zur Einhaltung der Emissionen ebenfalls entsprechend verändert werden. So kann bei SCR-Systemen, also bei selektiver katalytischer Reduktion von Stickoxiden, beispielsweise die zugeführte Reduktionsmittelmenge variiert werden. Bei NOₓ-Speicherkatalysatoren und Partikelfiltern ist es möglich, das Verhältnis zwischen Speicherung und Regeneration zu verändern.

Auch eine Veränderung von Motor- und Nachbehandlungsparametern ist denkbar, indem z.B. über Veränderungen auf der Motorseite, wie Veränderung des Einspritzzeitpunktes, der Einspritzmenge, der Einspritzintervalle, der Abgasrückführungsrate usw., die Abgastemperatur und/oder die Abgasmasse verändert wird. Da die Temperatur und die durch das Nachbehandlungssystem geleitete Abgasmasse in engem Zusammenhang mit den zu erreichenden Umsätzen steht, resultiert daraus eine Veränderung der Umsatzfähigkeit des Nachbehandlungssystems.

Außerdem ist es denkbar, über die Dauer und/oder die kumulierte Menge des nicht zugelassenen Kraftstoffs auf die langfristige Veränderung der Abgasemissionen zu schließen. Dies kann beispielsweise durch ein verstärktes Verkoken der Einspritzdüsen und/oder eine beschleunigte chemische Deaktivierung des Nachbehandlungssystems verursacht werden. Der anschließende Einsatz von zugelassenem Kraftstoff führt auf Grund dieser irreversiblen Schädigungen meist nicht mehr zu den Emissionen vor der Verwendung des nicht zugelassenen Kraftstoffs.

Auch hier ist ein Gegensteueren durch Veränderung der Betriebsparameter des Motors und/oder des Nachbehandlungssystems denkbar.

Durch den Betrieb des Motors mit nicht zugelassenem Kraftstoff kann es nötig sein, die Serviceintervalle, beispielsweise die Ölwechselintervalle oder die Wechsel- und Reinigungsintervalle von Einspritzdüsen, Verdichtern, Kühlern etc., zu verkürzen, da es ansonsten zu einer langfristigen Veränderung der Emissionen kommt. Diese geänderten Serviceintervalle zu ermitteln und dem Betreiber anzuzeigen, stellt eine weitere Möglichkeit zur Anwendung des Verfahrens dar.

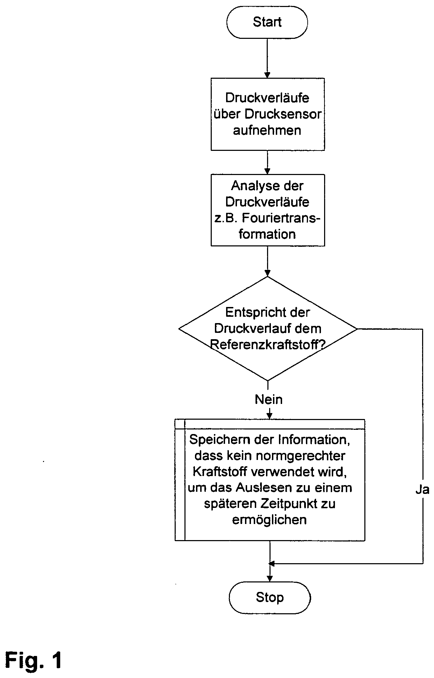

Zur weiteren Erläuterung der im Vorstehenden angesprochenen Steuerungsabläufe werden nachfolgend einige Abläufe beispielhaft mit Hilfe von Blockdiagrammen nach den Figuren 1 bis 5 beschrieben. Dabei wird davon ausgegangen, dass die beschriebenen Steuerungsabläufe in übergeordnete Steuerungsroutinen eingebettet sind, die mit Hilfe eines elektronischen Motorsteuersystems ausgeführt werden, das bei modernen Motoren üblicherweise zur Motorsteuerung vorhanden ist.

Das Blockdiagramm nach Fig. 1 zeigt einen Ablauf zur Ermittlung der Verwendung eines nicht zugelassenen Kraftstoffes und die Speicherung einer diesbezüglichen Information zum späteren Abruf.

Nach dem Start des Steuerungsablaufes werden zu vorgegebenen Zeitpunkten Druckverläufe im Kraftstoffsystem mittels eines oder mehrerer Drucksensoren aufgenommen. Die Zeitpunkte sind dabei so gewählt, dass über die Druckverläufe eine Aussage über den im Kraftstoffsystem befindlichen Kraftstoff möglich ist. Im nächsten Schritt wird der ermittelte Druckverlauf mittels eines Analyseverfahrens, z.B. einer Fouriertransformation des Druckverlaufs so aufbereitet, dass die gewonnen Informationen auf einfache Weise mit charakteristischen gespeicherten Informationen eines zugelassenen Referenzkraftstoffes verglichen werden können. Dieser Vergleich findet im nächsten Schritt statt. In Abhängigkeit vom Vergleichsergebnis erfolgt bei Übereinstimmung der gewonnenen Informationen mit den gespeicherten Informationen die Beendigung des Steuerungsablaufes. Bei nicht Übereinstimmung hingegen erfolgt die Abspeicherung einer Information, dass kein zugelassener Kraftstoff verwendet wird. Parallel dazu ist die Abspeicherung des Zeitpunktes zu dem die Nichtübereinstimmung festgestellt wurde denkbar, da entsprechende Motorsteuersysteme üblicherweise eine Zeiterfassungseinrichtung beinhalten, die zur Feststellung des Zeitpunktes abgefragt werden kann. Nach erfolgter Abspeicherung wird der Steuerungsablauf ebenfalls beendet.

Durch Abfragen der Speicherwerte ist zu einem späteren Zeitpunkt der Umstand der Verwendung eines nicht zugelassenen Kraftstoffes und gegebenenfalls die Zeitdauer der Verwendung feststellbar.

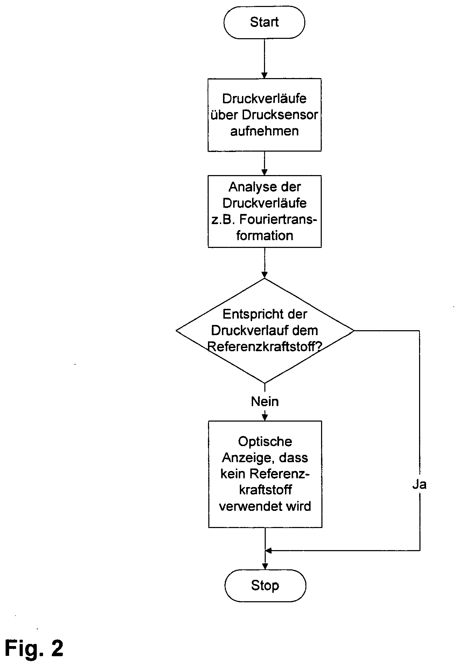

In Abwandlung des vorstehend beschriebenen Beispiels besteht die Möglichkeit, den Umstand, dass ein nicht zugelassener Kraftstoff verwendet wird, direkt zur Anzeige zu bringen, um z.B. eine Bedienperson zu informieren oder zu alarmieren. Einen entsprechenden Steuerungsablauf zeigt Fig. 2. Hier sind die ersten drei Steuerschritte identisch mit den zum Blockdiagramm gemäß Figur1 beschriebenen, es wird auf die entsprechenden Beschreibungsteile verwiesen. Danach erfolgt bei Übereinstimmung der gewonnenen Informationen mit den gespeicherten Informationen die Beendigung des Steuerungsablaufes. Bei nicht Übereinstimmung hingegen erfolgt die Anzeige einer Information, dass kein zugelassener Kraftstoff verwendet wird. Die Anzeige kann optisch und/ oder akustisch und/ oder taktil erfolgen und so lange bestehen bleiben, wie sich nicht zugelassener Kraftstoff im Kraftstoffsystem befindet.

Selbstverständlich ist auch eine Kombination der Steuerungsabläufe nach den Blockdiagrammen gemäß den Figuren 1 und 2 denkbar, in diesem Fall werden der Steuerschritt zur Abspeicherung der Information dass kein zugelassener Kraftstoff verwendet wird und der Steuerschritt zur Anzeige dieses Umstandes parallel oder nacheinander ausgeführt.

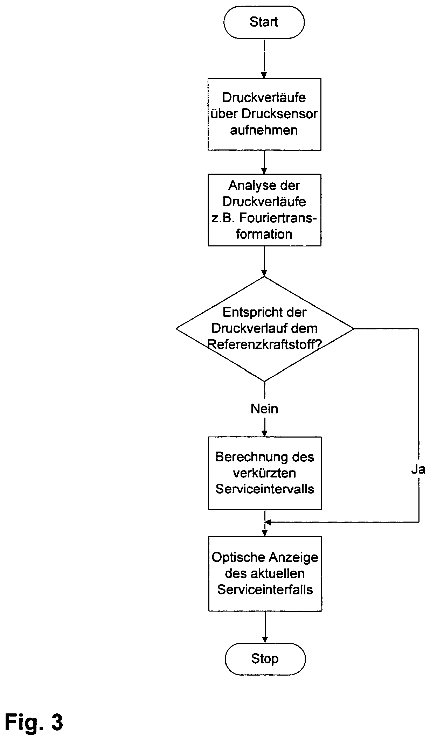

Wie bereits oben beschrieben, kann die Verwendung eines nicht zugelassenen Kraftstoffes zu einer Verkürzung der einzuhaltenden Serviceintervalle z.B. eines motorbetriebenen Fahrzeugs führen. Um dieser Gefahr zu begegnen besteht gemäß dem Blockdiagramm nach Fig. 3 die Möglichkeit, nach erfolgter Feststellung, dass ein nicht zugelassener Kraftstoff verwendet wird, in einem entsprechenden Steuerschritt die Verkürzung des Serviceinterwalls zu berechnen und in einem weiteren Steuerschritt den berechneten neuen Serviceintervall anzuzeigen. Die Steuerschritte zur Feststellung des Unstandes, dass ein nicht zugelassener Kraftstoff verwendet wird, sind identisch zu den entsprechenden in Verbindung mit dem Blockdiagramm nach Figur 1 beschriebenen Steuerschritten, so dass sich eine nochmalige Beschreibung erübrigt.

Selbstverständlich lässt sich der Steuerungsablauf gemäß dem Blockdiagramm nach Figur 3 mit den Steuerungsabläufen gemäß den Blockdiagrammen nach den Figuren 1 und/ oder 2 kombinieren.

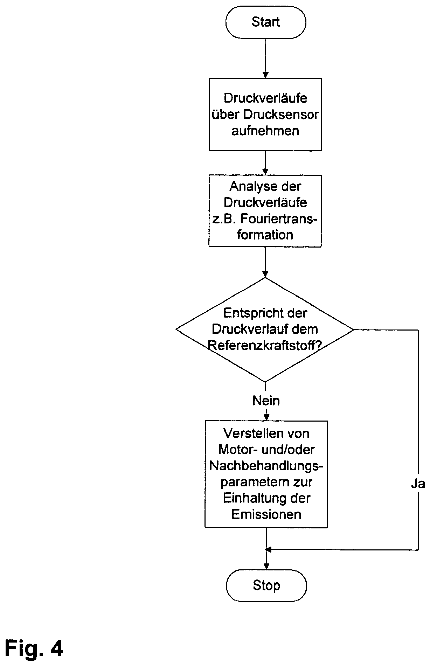

Weiter kann bei Verwendung eines nicht zugelassenen Kraftstoffes in einem Motor, wie ebenfalls oben bereits angesprochen, die Notwendigkeit bestehen, die Betriebsparameter des Motors und/ oder des Abgasnachbehandlungssystems durch Veränderung der Einstellungen anzupassen, um z.B. die zulässigen Emissionen eines Motors einzuhalten. Ein entsprechender Steuerungsablauf ist im Blockdiagramm gemäß Fig. 4 gezeigt.

Auch in diesem Beispiel ist zunächst festzustellen, ob der ermittelte Druckverlauf dem Druckverlauf des Referenzkraftstoffes entspricht. Die hierzu durchzuführenden Steuerschritte sind identisch mit den entsprechenden zum Blockdiagramm nach Figur 1 beschriebenen, es wird deshalb auf die diesbezüglichen Beschreibungsteile zu Figur 1 verwiesen. Wird festgestellt, dass der ermittelte Druckverlauf nicht dem Druckverlauf des Referenzkraftstoffes entspricht, wird in einem weiteren Steuerschritt mit Hilfe gespeicherter Einstellwerte und/ oder mit Hilfe aktivierbarer Regelkreise die Schadstoffemissionen auf ein zulässiges Maß zurückgeführt. Entsprechende Regel- bzw. Steuermechanismen sind in der Fachliteratur ausführlich beschrieben, so dass es keiner weiteren Erläuterung bedarf. Motorbetriebsparameter die zur Schadstoffminimierung herangezogen werden können sind unter anderem der Einspritzzeitpunkt, die Einspritzmenge, die Einspritzintervalle, die Abgasrückführungsrate, die Abgastemperatur, die Abgasmasse, usw..

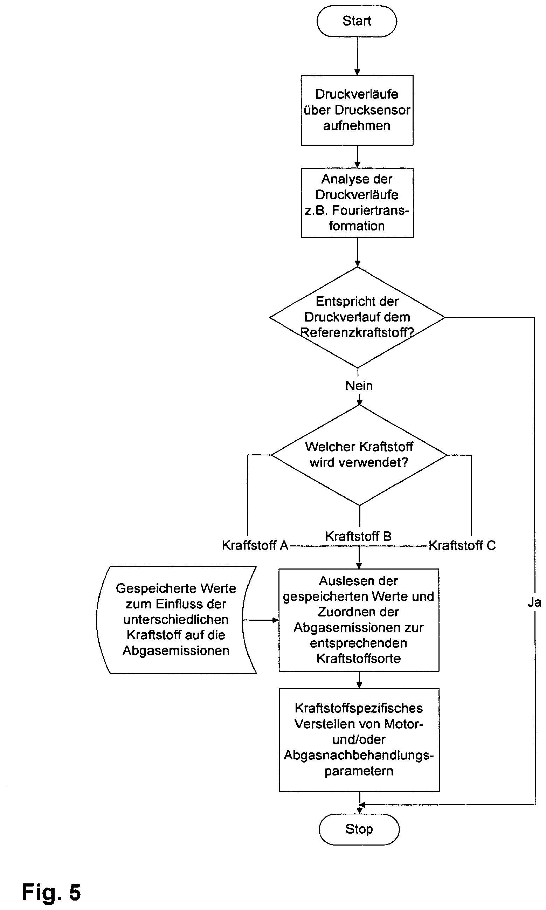

Nachdem auf dem Markt üblicherweise eine begrenzte Anzahl verwendbarer Kraftstoffe erhältlich ist, kann zur Einstellung der Betriebsparameter der Brennkraftmaschine bzw. des Abgasnachbehandlungssystems der Brennkraftmaschine auch entsprechend dem Beispiel nach dem Blockdiagramm gemäß Fig. 5 vorgegangen werden. Der dort dargestellte Steuerungsablauf ist in den ersten Schritten bis zur Abfrage, ob der festgestellte Druckverlauf mit dem Druckverlauf des Referenzkraftstoffes übereinstimmt, identisch zu dem in Verbindung mit dem Blockdiagramm nach Figur 1 beschriebenen, so dass auch hier auf die entsprechende Beschreibung zum Beispiel nach Figur 1 verwiesen wird. Wurde in der angesprochenen Abfrage festgestellt, dass der ermittelte Druckverlauf nicht mit dem Druckverlauf des Referenzkraftstoffes übereinstimmt, erfolgt ein weiterer Vergleich mit gespeicherten weiteren Druckverläufen, die bekannten Kraftstoffen entsprechen. Wird eine Übereinstimmung gefunden, werden die zugehörigen Betriebsparameter für den Motor und gegebenenfalls das Abgasnachbehandlungssystem aus einem Speicher ausgelesen und zur Steuerung von Motor und Abgasnachbehandlungssystem herangezogen, so dass eine kraftstoffspezifische Verstellung der Motor und Abgasnachbehandlungsparameter erfolgt.

Selbstverständlich lassen sich die Steuerungsabläufe nach den Blockdiagrammen gemäß der Figuren 4 und 5 kombinieren, wodurch auch bei vorliegen eines unbekannten Kraftstoffes eine Schadstoffminimierung gemäß dem Beispiel nach Figur 4 möglich wird.

Weiterhin lassen sich die Steuerungsabläufe nach Figur 4 und 5 bzw. eine Kombination daraus mit den Steuerungsabläufen nach den Figuren 1 bis 3 in beliebiger Weise kombinieren.

## Patentansprüche

1. Verfahren zur Bestimmung der Abweichung der Qualität eines Kraftstoffs von einer Referenzqualität und der dadurch bedingten Veränderung der Abgasemissionen durch Auswertung von Druckwellen im Kraftstoffsystem, wobei
- die Brennkraftmaschine mit einer diskontinuierlichen Kraftstoffförderung und/oder Kraftstoffentnahme ausgerüstet ist bzw. wird,
- während des Betriebs die sich im Kraftstoffsystem ausbildenden Druckschwingungen mit Hilfe mindestens eines Sensors detektiert werden,
- durch die Analyse dieses Druckverlaufs in einer elektronischen Kontrolleinheit die Abweichung von einer Kraftstoffreferenzqualität ermittelt werden,
**dadurch gekennzeichnet, dass**
- aus der Abweichung von einer Kraftstoffreferenzqualität Abweichungen der Rohemissionen der Brennkraftmaschine von den Rohemissionen bei Verwendung des Referenzkraftstoffs und/oder Einflüsse auf das im Vergleich zum Betrieb mit Referenzkraftstoff veränderte Verhalten eines der Brennkraftmaschine nachgeschalteten Nachbehandlungssystems bestimmt werden und
- dass bei Ermittlung einer Abweichung von der Referenzkraftstoffqualität eine Veränderung von Betriebsparametern eines der Brennkraftmaschine nachgeordneten Abgasnachbehandlungssystems durchgeführt wird,
wobei die Betriebsparameter des Nachbehandlungssystems in Abhängigkeit von den aus den Druckschwingungen gewonnen Informationen so verändert werden, dass die Emissionen denen bei Verwendung des Referenzkraftstoffs zumindest angenähert sind;
- wobei die Emissionen bei Verwendung eines Nicht-Referenzkraftstoffs an die Emissionen bei Verwendung des Referenzkraftstoffs dadurch angepasst werden,
a) dass bei Verwendung eines Katalysators zur selektiven katalytischen Reduktion der Stickoxide die zugeführte Reduktionsmittelmenge verändert wird; und/oder
b) dass bei Verwendung eines NOx-Speicherkatalysators zur Reduktion der Stickoxide die Verhältnisse zwischen fetten und mageren Betriebsphasen verändert werden; und/oder
c) dass bei Verwendung eines Partikelfilters zur Abscheidung von Rußpartikeln die Intervalle zwischen Rußeinspeicherung und Partikelfilterregeneration verändert werden; und/oder
d) dass bei Verwendung eines Nachbehandlungssystems die Abgastemperaturen durch Veränderung der Betriebsparameter der Brennkraftmaschine verändert werden.

2. Verfahren nach Anspruch 1, **dadurch gekennzeichnet, dass** durch die Analyse des Druckverlaufs in einer elektronischen Kontrolleinheit die Kraftstoffart ermittelt wird.

3. Verfahren nach Anspruch 1 oder 2, **dadurch gekennzeichnet, dass** bei Ermittlung einer Abweichung von der Referenzkraftstoffqualität
a) die Serviceintervalle verändert werden und/ oder
b) eine Information über die Verwendung eines vom Referenzkraftstoff abweichenden Kraftstoffes zur Anzeige gebracht wird und/oder
c) das veränderte Serviceintervall zur Anzeige gebracht wird und/oder
d) eine Veränderung von Betriebsparametern der Brennkraftmaschine durchgeführt wird.

4. Verfahren nach einem der Ansprüche 1 bis 3, **dadurch gekennzeichnet, dass** die Temperaturdifferenz zwischen der Niederdruck- und der Hochdruckseite der Kraftstofffördereinrichtung mit Hilfe von Sensoren ermittelt und zur Bestimmung der Abweichung der Qualität eines Kraftstoffs von einer Referenzqualität und/oder der Kraftstoffsorte herangezogen wird.

5. Verfahren nach einem der Ansprüche 1 bis 4, **dadurch gekennzeichnet, dass** die Dauer der Abweichung von der Kraftstoffqualität und/oder deren Häufigkeit und/oder deren erstes und/oder letztes Auftreten und/oder die Kraftstoffsorte in einer elektronischen Kontrolleinheit gespeichert wird.

6. Verfahren nach Anspruch 5, **dadurch gekennzeichnet, dass** mit Hilfe dieser gespeicherten Informationen auf den Grad einer chemischen und/oder thermischen Deaktivierung des Nachbehandlungssystems und/oder eine langfristige Veränderung der Emissionen geschlossen wird.

7. Verfahren nach einem der vorhergehenden Ansprüche, **dadurch gekennzeichnet, dass** die aus den Druckschwingungen entnommenen Informationen optisch angezeigt werden.

8. Verfahren nach einem der vorhergehenden Ansprüche, **dadurch gekennzeichnet, dass** die aus den Druckschwingungen gewonnenen Informationen gespeichert werden.

## Claims

1. A method for determining the deviation of the quality of a fuel from a reference quality, and the resulting change in exhaust-gas emissions, through evaluation of pressure waves in the fuel system, wherein
- the internal combustion engine is equipped with discontinuous fuel conveyance and/or fuel withdrawal,
- during operation, the pressure oscillations which form in the fuel system are detected by means of at least one sensor,
- the deviation from a fuel reference quality is ascertained through the analysis of this pressure profile in an electronic control unit,
**characterized in that**
- deviations of the untreated emissions of the internal combustion engine from the untreated emissions in the case of the reference fuel being used and/or influences on the changed behaviour of an aftertreatment system connected downstream of the internal combustion engine in relation to operation with reference fuel are determined from the deviation from a fuel reference quality, and
- **in that**, in the event of a deviation from the reference fuel quality being ascertained, a change of operating parameters of an exhaust-gas aftertreatment system positioned downstream of the internal combustion engine is performed,
wherein the operating parameters of the aftertreatment system are changed, in a manner dependent on the information items obtained from the pressure oscillations, such that the emissions are at least approximated to those in the case of the reference fuel being used;
- wherein the emissions in the case of a non-reference fuel being used are adapted to the emissions in the case of the reference fuel being used
a) **in that**, in the case of a catalytic converter for selective catalytic reduction of the nitrogen oxides being used, the supplied reducing agent quantity is changed; and/or
b) **in that**, in the case of a NOₓ storage catalytic converter for the reduction of the nitrogen oxides being used, the ratios between rich and lean operating phases are changed; and/or
c) **in that**, in the case of a particle filter for separating off soot particles being used, the intervals between soot accumulation and particle filter regeneration are changed; and/or
d) **in that**, in the case of an aftertreatment system being used, the exhaust-gas temperatures are changed by changing the operating parameters of the internal combustion engine.

2. The method according to Claim 1, **characterized in that** the fuel type is ascertained through the analysis of the pressure profile in an electronic control unit.

3. The method according to Claim 1 or 2, **characterized in that,** in the event of a deviation from the reference fuel quality being ascertained,
a) the service intervals are changed, and/or
b) an information item relating to the use of a fuel which deviates from the reference fuel is displayed, and/or
c) the changed service interval is displayed, and/or
d) a change of operating parameters of the internal combustion engine is performed.

4. The method according to any of Claims 1 to 3, **characterized in that** the temperature difference between the low-pressure and the high-pressure side of the fuel-conveying device is ascertained by means of sensors and is taken into consideration for the determination of the deviation of the quality of a fuel from a reference quality and/or of the fuel type.

5. The method according to any of Claims 1 to 4, **characterized in that** the duration of the deviation from the fuel quality and/or the frequency thereof and/or the first and/or last occurrence thereof and/or the fuel type is stored in an electronic control unit.

6. The method according to Claim 5, **characterized in that** the degree of a chemical and/or thermal deactivation of the aftertreatment system and/or a long-term change in the emissions is inferred with the aid of these stored information items.

7. The method according to any of the preceding claims, **characterized in that** the information items obtained from the pressure oscillations are visually displayed.

8. The method according to any of the preceding claims, **characterized in that** the information items obtained from the pressure oscillations are stored.

## Revendications

1. Procédé permettant de déterminer un écart de la qualité d'un carburant par rapport à une qualité de référence et la modification des émissions de gaz d'échappement engendrée par l'évaluation d'ondes de pression dans le système de carburant, dans lequel
- le moteur à combustion interne est ou sera équipé d'un dispositif d'alimentation en carburant et/ou d'un dispositif de prélèvement de carburant discontinus,
- en cours de fonctionnement, les oscillations de pression créées dans le système de carburant sont détectées à l'aide d'au moins un capteur,
- l'analyse de cette courbe de pression dans une unité de contrôle électronique permet de déterminer l'écart par rapport à une qualité de référence de carburant,
**caractérisé**
- **en ce qu'**à partir de l'écart par rapport à une qualité de référence de carburant, des écarts des émissions brutes du moteur à combustion interne par rapport aux émissions brutes en cas d'utilisation du carburant de référence sont déterminés, et/ou des influences sur le comportement d'un système de post-traitement placé en aval du moteur à combustion interne, modifié en comparaison avec le fonctionnement avec le carburant de référence, sont déterminées, et
- **en ce que** lors de la détermination d'un écart par rapport à la qualité de carburant de référence, une modification de paramètres de fonctionnement d'un système de post-traitement de gaz d'échappement placé en aval du moteur à combustion interne est effectuée, les paramètres de fonctionnement du système de post-traitement étant modifiés en fonction des informations obtenues à partir des oscillations de pression de telle sorte que les émissions sont rendues au moins similaires à celles en cas d'utilisation du carburant de référence ;
- dans lequel les émissions en cas d'utilisation d'un carburant de non-référence sont adaptées aux émissions en cas d'utilisation du carburant de référence
a) **en ce qu'**en cas d'utilisation d'un catalyseur pour la réduction catalytique sélective des oxydes d'azote, la quantité de réducteur apportée est modifiée ; et/ou
b) **en ce qu'**en cas d'utilisation d'un catalyseur à accumulation de NOₓ, les rapports entre les phases de fonctionnement avec un mélange riche et maigre sont modifiés pour réduire les oxydes d'azote ; et/ou
c) **en ce qu'**en cas d'utilisation d'un filtre à particules, les intervalles entre l'accumulation de suie et la régénération du filtre à particules sont modifiés pour séparer des particules de suie ; et/ou
d) **en ce qu'**en cas d'utilisation d'un système de post-traitement, les températures de gaz d'échappement sont modifiées par la modification des paramètres de fonctionnement du moteur à combustion interne.

2. Procédé selon la revendication 1, **caractérisé en ce que** l'analyse de la courbe de pression dans une unité de contrôle électronique permet de déterminer le type de carburant.

3. Procédé selon la revendication 1 ou 2, **caractérisé en ce que** lors de la détermination d'un écart par rapport à la qualité de carburant de référence,
a) les intervalles d'entretien sont modifiés, et/ou
b) une information concernant l'utilisation d'un carburant différent du carburant de référence est affichée, et/ou
c) l'intervalle d'entretien modifié est affiché, et/ou
d) une modification des paramètres de fonctionnement du moteur à combustion interne est effectuée.

4. Procédé selon l'une quelconque des revendications 1 à 3, **caractérisé en ce que** la différence de température entre le côté basse pression et le côté haute pression du dispositif d'alimentation en carburant est déterminée à l'aide de capteurs, et est exploitée pour déterminer l'écart de la qualité d'un carburant par rapport à une qualité de référence et/ou le type de carburant.

5. Procédé selon l'une quelconque des revendications 1 à 4, **caractérisé en ce que** la durée de l'écart par rapport à la qualité de carburant et/ou sa fréquence et/ou sa première et/ou sa dernière occurrence et/ou le type de carburant sont mémorisés dans une unité de contrôle électronique.

6. Procédé selon la revendication 5, **caractérisé en ce que** ces informations mémorisées permettent de conclure au degré d'une désactivation chimique et/ou thermique du système de post-traitement et/ou à une modification à long terme des émissions.

7. Procédé selon l'une quelconque des revendications précédentes, **caractérisé en ce que** les informations extraites des oscillations de pression sont affichées optiquement.

8. Procédé selon l'une quelconque des revendications précédentes, **caractérisé en ce que** les informations obtenues à partir des oscillations de pression sont mémorisées.
